# EUROPÄISCHE PATENTSCHRIFT

(11) **EP 1 704 329 B1**
(45) Veröffentlichungstag und Bekanntmachung des Hinweises auf die Patenterteilung: **23.01.2008**
(21) Anmeldenummer: 05822042.7
(22) Anmeldetag: 14.12.2005
(51) Int. Cl.: F04B 53/14, F04B 1/04, F04B 27/04, F04B 1/12, F04B 27/08

(54) **KOLBEN FÜR AXIALKOLBENMASCHINE IN SCHRÄGACHSENBAUWEISE UND VERFAHREN ZUR HERSTELLUNG SOLCHER KOLBEN**
PISTON FOR AXIAL PISTON ENGINE WITH INCLINED AXES, AND METHOD FOR PRODUCING ONE SUCH PISTON
PISTON POUR MACHINE A PISTON AXIAL DU TYPE A AXES INCLINES, ET PROCEDE DE FABRICATION D'UN TEL PISTON

(30) Priorität: 22.12.2004 DE 102004061863
(43) Veröffentlichungstag der Anmeldung: 27.09.2006
(73) Patentinhaber: Brueninghaus Hydromatik GmbH, 89275 Elchingen (DE)
(72) Erfinder: BROCKERHOFF, Rolf, 72178 Waldachtal (DE)
(74) Vertreter: Körfer, Thomas
(86) Internationale Anmeldenummer: PCT/EP2005/013437
(87) Internationale Veröffentlichungsnummer: WO 2006/069632

(56) Entgegenhaltungen:
- WO-A-01/07201
- DE-A1- 10 305 136
- US-A- 4 519 300
- US-A- 5 265 331

## Beschreibung

Die Erfindung betrifft einen Kolben für eine Axialkolbenmaschine in Schrägachsenbauweise gemäß Anspruch 1 und ein Verfahren zur Herstellung eines solchen Kolbens gemäß Anspruch 15.

Axialkolbenmaschinen finden weite Verbreitung z.B. als hydraulische Pumpen für Hydraulik-Flüssigkeiten. Beispielsweise ist aus der DE 33 19 822 A1 eine hydraulische Pumpe bekannt, welche einen Pumpenkörper, einen zylindrischen Rotor, und einen äußeren Träger umfaßt, der den Rotor umgibt und in dem dieser befestigt ist. Weiterhin sind ein Einlaß und ein Auslaß in einer Fläche des Pumpenkörpers für die zu fördernde Flüssigkeit vorgesehen. In dem Rotor sind mehrere Zylinder ausgebildet, die in gleichen Winkelabständen parallel oder radial zur Rotorachse verlaufen. In den Zylindern sind bei Drehung des Rotors hin- und herbewegbare Kolben angeordnet. Ein Kurventrieb ist für den Rotor vorgesehen, durch den die Zylinder zum Ansaugen von Flüssigkeit nacheinander über die Fläche und an dem Einlaß vorbei und nacheinander an dem Auslaß vorbei bewegt werden, wodurch die Flüssigkeit unter der Wirkung der Kolben an der Auslaßfläche ausgestoßen wird. Weiterhin ist eine Vorkompressionszone zwischen Einlaß und Auslaß vorgesehen, an der sich die Zylinder vorbeibewegen, wenn sie sich vom Einlaß zum Auslaß bewegen.

Nachteilig an den bekannten Axialkolbenmaschinen in Schrägachsenbauweise sind dabei insbesondere die massive Ausführung der Kolben, welche einerseits die Drehzahl der Kolbenmaschine bedingt durch die wirkenden Kräfte begrenzt.

Andererseits ist bei Massivkolben die Aufnahmefähigkeit der Kolben für Stöße, die beim Betrieb der Axialkolbenmaschine durch Ungleichförmigkeiten der Zylindertrommelrotation unvermeidlich sind, unzureichend, wodurch ebenfalls die Drehzahl begrenzt ist und zudem mechanische Schäden an Kolben und Zylindertrommel schneller auftreten können.

Aufgabe der Erfindung ist es demnach, einen Kolben für eine Axialkolbenmaschine in Schrägachsenbauweise zu schaffen, welche leicht und elastisch genug sind, um Stöße aufzunehmen, einen runden Lauf auch bei hohen Drehzahlen zu gewährleisten und günstig in der Herstellung sind, sowie ein Verfahren zur Herstellung solcher Kolben anzugeben.

Die Aufgabe wird hinsichtlich des Kolbens durch die Merkmale des Anspruchs 1 und hinsichtlich des Verfahrens durch die Merkmale des Anspruchs 15 gelöst.

Vorteilhafterweise weist dabei der Kolben eine Ausnehmung sowie geeignete Innen- und Außenkonturen auf, wobei die Materialstärke der einzelnen Bereiche je nach den Anforderungen unterschiedlich gewählt wird.

Besonders vorteilhaft ist die Ausbildung eines dickeren Bodens zur Aufnahme der Kolbenringe, eines nahezu massiven Kugelkopfes zur Stabilisierung des Kolbens sowie von dünnen Wänden im konischen Bereich des Kolbens zur Gewichtseinsparung.

Vorteilhafte Weiterbildungen des erfindungsgemäß ausgestalteten Kolbens und des erfindungsgemäßen Verfahrens sind in den Unteransprüchen angegeben.

Nachfolgend werden die Erfindung und weitere durch sie erzielbare Vorteile anhand von bevorzugten Ausgestaltungen und Zeichnungen näher erläutert. Es zeigen:
- Fig. 1: eine geschnittene Darstellung einer Axialkolbenmaschine in Schrägachsenbauweise, die zur Anwendung der erfindungsgemäß ausgestalteten Kolben geeignet ist, und
- Fig. 2A-E: eine schematische Darstellung der zur Herstellung eines erfindungsgemäß ausgestalteten Kolbens benötigten Verfahrensschritte.

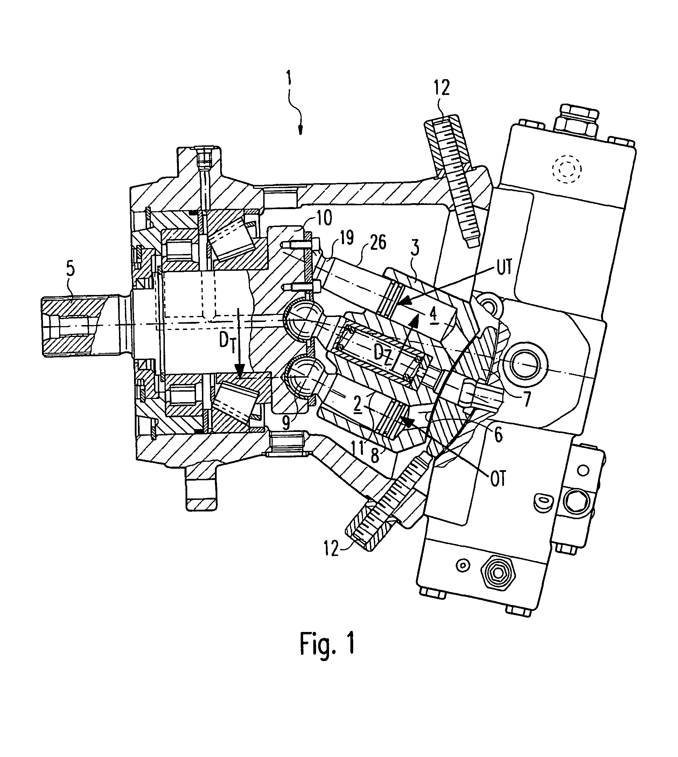

Fig. 1 zeigt einen axialen Schnitt durch eine Axialkolbenmaschine 1 in Schrägachsenbauweise, welche zum Einsatz der erfindungsgemäß ausgestalteten Kolben 2 geeignet ist. Der grundsätzliche Aufbau einer Axialkolbenmaschine 1 in Schrägachsenbauweise ist bekannt, so daß sich die nachfolgende Beschreibung auf die erfindungswesentlichen Bauteile beschränken kann.

Die Axialkolbenmaschine 1 umfaßt eine Zylindertrommel 3, in welcher mehrere Zylinder 4 vorzugsweise in gleichen Winkelabständen ausgebildet sind, in welchen Kolben 2 zur Förderung von Hydraulik-Flüssigkeit geführt sind. Die Axialkolbenmaschine 1 weist eine rotierende Wellenanordnung 5 auf, welche die Zylindertrommel 3 antreibt. Die Zylindertrommel 3 läuft gegen eine in ihrer Neigung einstellbare Fläche 6 an, wodurch die Kolben 2 in den Zylindern 4 hin- und herbewegt werden und Flüssigkeit fördern. Eine Verstellung des die Fläche 6 tragenden Bauteils 7 entlang einer radialen Bahn ändert den Neigungswinkel der Fläche 6 und damit den Hub der Kolben 2 bzw. die Fördermenge. Zur Begrenzung des Schwenkwinkels des Bauteils 7 sind Anschläge 12 vorgesehen.

Die Kolben 2 weisen einen konischen Abschnitt 26, einen Halsbereich 19 und einen daran ausgeformten Kugelkopf 9 auf, welcher in einen Führungskörper 10 eingreift und durch diesen mit der Wellenanordnung 5 in Wirkverbindung steht. Der konische Abschnitt 26 ist mit Kolbenringen 8 versehen, welche der Abdichtung dienen.

Die Synchronisation der Drehbewegung der Wellenanordnung 5 und der Zylindertrommel 3 erfolgt durch die mit dem konischen Abschnitt 26 an der jeweiligen Zylinderwandung 11 anliegenden Kolben 2. Aufgrund der Geometrie der konischen Kolben 2 und der korrespondierenden Zylinderwandung 11 entsteht ein Differenzwinkel zwischen der Wellenanordnung 5 und der Zylindertrommel 3, der je nach Drehwinkel unterschiedlich ist und eine ungleichförmige Rotation der Zylindertrommel 3 erzeugt.

Die Mitnahme der Zylindertrommel 3 erfolgt dabei jeweils nur durch denjenigen Kolben 2, welcher den geringsten Differenzwinkel zur Zylinderwandung 11 aufweist. Da der Differenzwinkel eine π-periodische Funktion ist, wechselt sich jeder der Kolben 2 pro Umdrehung zweimal als Führungskolben ab. Der Mitnahmewechsel erfolgt zum diametral gegenüberliegenden Kolben 2 jeweils in der Nähe des oberen bzw. unteren Totpunkts der Kolben 2, wie in Fig. 1 mit OT bzw. UT gekennzeichnet. Die Ungleichförmigkeit der Rotation der Zylindertrommel 3 ist in einem mittleren Schwenkwinkelbereich am höchsten. Eine Vergrößerung des maximalen Schwenkwinkels der Axialkolbenmaschine 1 bewirkt einen überproportionalen Anstieg der Ungleichförmigkeit im mittleren Schwenkwinkelbereich.

Da sich die Differenzwinkelkurve aus den einzelnen Kurvenstücken des Mitnahmebereichs der jeweiligen Kolben 2 zusammensetzt und mathematisch unstetig ist, ergeben sich beim Mitnahmewechsel Geschwindigkeitssprünge von theoretisch unendlich kurzer Dauer. Diese Geschwindigkeitssprünge sind abhängig von der Drehzahl sowie der Amplitude der Abweichungen vom Gleichlauf der Rotation der Zylindertrommel 3 und verursachen Stöße, die zu kritischen Drehschwingungen der Zylindertrommel 3 mit adhäsiv abrasivem Verschleiß zwischen Kolben 2 und Zylinderwandung 11 und in der Folge zu Fehlfunktionen der Axialkolbenmaschine 1 führen können.

Wird durch geeignete Maßnahmen die elastische Einfederungsmöglichkeit des Kolbens 2 verbessert, können die bei den Stößen auftretenden Kräfte durch eine verbesserte Aufnahmefähigkeit der Stoßenergie reduziert werden.

Erfindungsgemäß sind daher die Kolben 2 der dargestellten Axialkolbenmaschine 1 als geschlossene Hohlkolben 2 mit einer möglichst geringen Wandstärke ausgebildet, um eine verbesserte elastische Einfederungsmöglichkeit zu erzielen. Dies ist bei Axialkolbenmaschinen 1 in Schrägachsenbauweise insbesondere deshalb möglich, da im Gegensatz zu Axialkolbenmaschinen in Schrägscheibenbauweise nur vernachlässigbar geringe Querkräfte für die Mitnahme der Zylindertrommel 3 übertragen werden müssen.

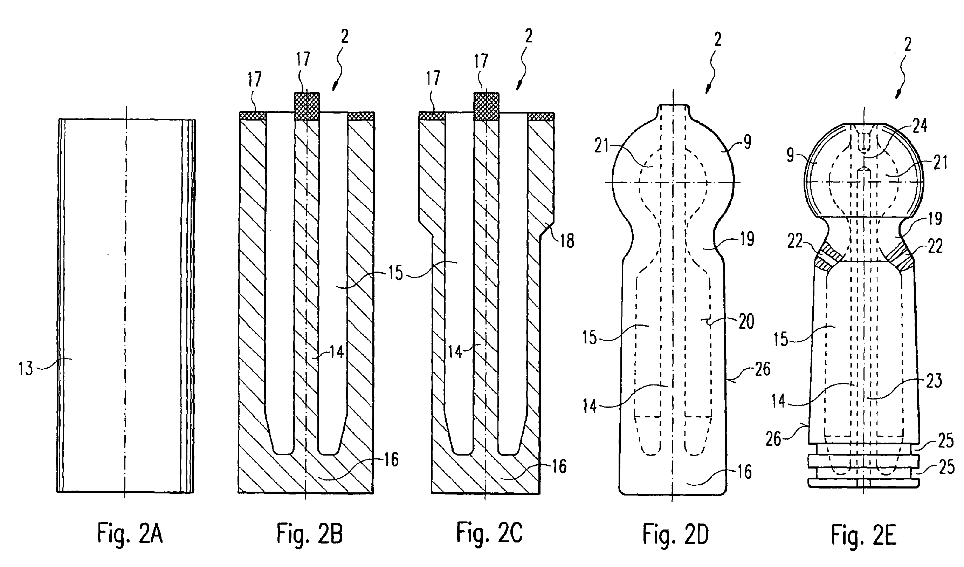

Wegen seiner speziellen, konischen Form bietet sich, wie in den Fig. 2A bis 2E im Detail beschrieben, die Ausbildung des Kolbens 2 als Rundknetteil aus kaltfließgepreßtem Halbzeug an. Die Wandstärke kann dabei entsprechend dünn gewählt werden, lediglich im Bereich der Kolbenringe 8 muß aus Festigkeitsgründen eine größere Wandstärke gewählt werden, da hier der Kolben 2 mit dem Betriebsdruck belastet ist.

Vorteile gewichtsoptimierter elastischer Kolben 2 liegen dabei insbesondere in der Möglichkeit, die Drehzahl und den Schwenkwinkel der Axialkolbenmaschinen 1 in Schrägachsenbauweise zu erhöhen.

Die Kolben 2 werden dabei durch das erfindungsgemäße Verfahren, wie in den Fig. 2A bis 2E schematisch dargestellt, hergestellt.

Fig. 2A zeigt einen ersten Fertigungsschritt, in welchem Rundmaterial 13 auf gewünschter Länge abgestochen wird. Der Durchmesser des Rundmaterials 13 beträgt dabei vorzugsweise etwa das 1,1- bis 1-5-fache, besonders bevorzugt etwa das 1,15- bis 1,2-fache des Durchmessers des Kugelkopfes 9 des Kolbens 2. Dies ist zugleich der maximale Durchmesser des konischen Kolbens 2.

In Fig. 2B ist der nächstfolgende Fertigungsschritt dargestellt, durch welchen in das Rundmaterial 13 durch Kaltfließpressen eine Innenkontur eingeprägt wird. Für einen innen ausgebildeten Zapfen 14, für eine innere Ausnehmung 15 des Kolbens 2, in welche sich der Zapfen 14 erstreckt, sowie für einen Boden 16 des Kolbens 2 sind geeignete Materialstärken zu wählen, welche die Festigkeit des Kolbens 2 gewährleisten. Materialüberläufe 17 aufgrund des Kaltfließpreßvorgangs können während der folgenden Bearbeitungsschritte stehenbleiben und bei der weiteren Formung des Kolbens 2 mitverwendet werden. Die Ausnehmung 15 weist dabei in einem dem Boden 16 des Kolbens 2 zugewandten Bereich einen geringeren Durchmesser und daher eine größere Wandstärke des Kolbens 2 in diesem Bereich auf.

Fig. 2C zeigt den nachfolgenden Verfahrensschritt der Vorbereitung der Außenkontur des Kolbens 2 durch Vordrehen. Dabei wird ein Materialabtrag im Bereich des geschlossenen Endes des Rohlings vorgenommen, während im Bereich eines offenen Endes eine Schulter 18 mit erhöhter Materialstärke verbleibt. Dieser Bereich wird im folgenden Verfahrensschritt zum Kugelkopf 9 des Kolbens 2 geformt. Die Wandstärken im Bereich des Bodens 16 des Kolbens 2 sind dabei so zu wählen, daß die Kolbenringe 8 ohne Schwächung des Kolbens 2 einbringbar sind.

Fig. 2D zeigt den Verfahrensschritt des Rundknetens des Kolbens 2 im Bereich des Kugelkopfes 9. Durch das Rundkneten wird einerseits der Kugelkopf 9 und andererseits die konische Form des Kolbens 2 hergestellt. Ein Halsbereich 19 wird dabei so eingeformt, daß eine Innenwandung 20 der Ausnehmung 15 an dem Zapfen 14 in Anlage gebracht wird. Dadurch wird die Ausnehmung 15 gegen den Halsbereich 19 abgeschlossen. In dem Kugelkopf 9 ist ein weiterer Hohlraum 21 ausgebildet.

Abschließend werden, wie in Fig. 2E dargestellt, Bohrungen 22 im Halsbereich 19 des Kolbens 2 eingebracht, durch welche die Ausnehmung 15 mit einer geeigneten Flüssigkeit wie z.B. Öl befüllt werden kann. Dadurch wird sichergestellt, daß sich kein Flüssigkeitsdruck in der Ausnehmung 15 aufbaut. Weiterhin wird eine Längsbohrung 23 mit einer festen Drosselstelle 24 in den Zapfen 14 eingebracht, um eine gleichmäßige Druckschmierung des Kugelkopfes 9 zu garantieren. Im Bereich des Bodens 16 des Kolbens 2 werden Nuten 25 für die Kolbenringe 8 eingedreht. Abschließend wird der Kolben 2 gehärtet und geschliffen.

Die Erfindung ist nicht auf das dargestellte Ausführungsbeispiel beschränkt. Ein entsprechend ausgebildeter Kolben 2 kann wahlweise auch als offener Hohlkolben 2 ausgebildet werden, wenn der Wirkungsgradverlust durch das höhere Totvolumen in Kauf genommen werden kann. Ebenso ist eine Ausführung des geschlossenen Hohlkolbens 2 als Reibschweißteil oder mit verlötetem Deckel am Boden 16 des Kolbens 2 denkbar. Die einzelnen Merkmale der Erfindung sind beliebig miteinander kombinierbar.

## Patentansprüche

1. Kolben (2) für eine Kolbenmaschine, insbesondere für eine Axialkolbenmaschine (1) in Schrägachsenbauweise, umfassend einen konischen Abschnitt (26), einen Halsbereich (19) und einen an dem Halsbereich (19) angeformten Kugelkopf (9), eine in dem Kolben ausgebildete Ausnehmung (15) und einen in der Ausnehmung (15) ausgebildeten Zapfen (14),
wobei die Wandung (20) des Kolbens (2) in unterschiedlichen Abschnitten seiner axialen Länge unterschiedliche Materialstärken aufweist,
**dadurch gekennzeichnet,**
**daß** der konische Abschnitt (26) des Kolbens zwischen dem Halsbereich (19) und einem Bodenbereich des Kolbens (2) ausgeformt ist, wobei der Boden (16) an dem dem Kugelkopf (9) gegenüberliegenden Ende des Kolbens angeformt ist.

2. Kolben nach Anspruch 1,
**dadurch gekennzeichnet,**
**daß** die Materialstärke des Materials des Kolbens (2) in dem Boden (16) des Kolbens (2) und im Bereich des Kugelkopfes (9) größer ist als in dem konischen Abschnitt (26).

3. Kolben nach Anspruch 1 oder 2,
**dadurch gekennzeichnet,**
**daß** ein radialer Durchmesser der Ausnehmung (15) zum Boden (16) des Kolbens (2) abnimmt.

4. Kolben nach Anspruch 3,
**dadurch gekennzeichnet,**
**daß** die Ausnehmung (15) im Halsbereich (19) durch die Anlage einer Innenfläche der Wandung (20) der Ausnehmung (15) an den Zapfen (14) abgeschlossen ist.

5. Kolben nach Anspruch 4,
**dadurch gekennzeichnet,**
**daß** im Halsbereich (19) zumindest eine Bohrung (22) ausgebildet ist.

6. Kolben nach Anspruch 5,
**dadurch gekennzeichnet,**
**daß** die Ausnehmung (15) durch die zumindest eine Bohrung (22) mit einer Hydraulik-Flüssigkeit befüllbar ist.

7. Kolben nach einem der Ansprüche 1 bis 6,
**dadurch gekennzeichnet,**
**daß** in dem Zapfen (14) eine Längsbohrung (23) ausgebildet ist.

8. Kolben nach Anspruch 7,
**dadurch gekennzeichnet,**
**daß** in der Längsbohrung (23) eine Drosselstelle (24) vorgesehen ist.

9. Kolben nach einem der Ansprüche 1 bis 8,
**dadurch gekennzeichnet,**
**daß** der Kolben (2) Kolbenringe (8) aufweist.

10. Kolben nach Anspruch 9,
**dadurch gekennzeichnet,**
**daß** die Kolbenringe (8) in Nuten (25) im Bereich des Bodens (16) des Kolbens (2) angeordnet sind.

11. Kolben nach einem der Ansprüche 1 bis 10,
**dadurch gekennzeichnet,**
**daß** in dem Kugelkopf (9) ein Hohlraum (21) ausgebildet ist.

12. Kolben nach einem der Ansprüche 1 bis 11,
**dadurch gekennzeichnet,**
**daß** der Kolben (2) aus Rundmaterial (13) durch Kaltfließpressen und Rundkneten hergestellt ist.

13. Kolben nach Anspruch 12,
**dadurch gekennzeichnet,**
**daß** die Materialstärke des Rundmaterials (13) so bemessen ist, daß sie das 1,1- bis 1,5-fache, bevorzugt das 1,15-bis 1,2-fache des Durchmessers des Kugelkopfes (9) beträgt.

14. Kolben nach Anspruch 13,
**dadurch gekennzeichnet,**
**daß** der Durchmesser des Rundmaterials (13) den maximalen Durchmesser des Kolbens (2) bestimmt.

15. Verfahren zur Herstellung eines Kolbens (2) für eine Kolbenmaschine, insbesondere für eine Axialkolbenmaschine (1) in Schrägachsenbauweise, wobei der Kolben (2) einen konischen Abschnitt (26), einen Halsbereich (19) und einen an dem Halsbereich (19) angeformten Kugelkopf (9), eine in dem Kolben ausgebildete Ausnehmung (15) und einen in der Ausnehmung (15) ausgebildeten Zapfen (14) umfaßt und wobei die Wandung (20) des Kolbens (2) in unterschiedlichen Abschnitten seiner axialen Länge unterschiedliche Materialstärken aufweist,
wobei das Verfahren die folgenden Verfahrensschritte umfaßt:
a) Abstechen von Rundmaterial (13) auf gewünschte Länge,
b) Herstellen einer Innenkontur durch Kaltfließpressen,
c) Vorbereiten der Außenkontur durch Vordrehen,
d) Herstellen der Außenkontur durch Rundkneten, und
e) Nachbearbeiten,
wobei der konische Abschnitt (26) des Kolbens zwischen dem Halsbereich (19) und einem Bodenbereich des Kolbens (2) ausgeformt wird, und
wobei der Boden (16) an dem dem Kugelkopf (9) gegenüberliegenden Ende des Kolbens angeformt wird.

16. Verfahren nach Anspruch 15,
**dadurch gekennzeichnet,**
**daß** der zweite Verfahrensschritt b) folgende Teilschritte umfaßt:
- Wählen eines geeigneten Durchmessers des Zapfens (14) und der Ausnehmung (15),
- Wählen der Materialstärke für einen Boden (16) des Kolbens (2), und
- Kaltfließpressen der Innenkontur des Kolbens (2) unter Berücksichtigung der gewählten Maße.

17. Verfahren nach Anspruch 15,
**dadurch gekennzeichnet,**
**daß** der dritte Verfahrensschritt c) folgende Teilschritte umfaßt:
- Vordrehen einer Außenkontur des Kolbens (2) unter Abtrag von Material im späteren konischen Abschnitt (26) des Kolbens (2), und
- Anpassen der Materialstärke in Form einer Schulter (18) im Bereich des zu formenden Kugelkopfes (9).

18. Verfahren nach Anspruch 15,
**dadurch gekennzeichnet,**
**daß** der fünfte Verfahrensschritt e) folgende Teilschritte umfaßt:
- Einbringen von zumindest einer Bohrung (22) im Halsbereich (19) des Kolbens (2),
- Befüllen der Ausnehmung (15) des Kolbens (2) mit einer geeigneten Flüssigkeit,
- Einbringen einer Längsbohrung (23) mit einer Drosselstelle (24) in den Zapfen (14),
- Einbringen von Nuten (25) für Kolbenringe (8) im Bereich des Bodens (16) des Kolbens (2), und
- Härten und Schleifen des Kolbens (2).

## Claims

1. Piston (2) for a piston engine, in particular for an axial-piston engine (1) of the inclined-axis type, said piston comprising a conical section (26), a neck region (19) and a ball end (9) which is formed onto said neck region (19), a clearance (15) which is constructed in the piston and a pin (14) which is constructed in said clearance (15),
wherein the wall (20) of the piston (2) has different thicknesses of material in different sections of its axial length,
**characterised in that**
the conical section (26) of the piston is formed out between the neck region (19) and a base region of the piston (2), the base (16) being formed onto the opposite end of the piston from the ball end (9).

2. Piston according to Claim 1,
**characterised in that**
the thickness of the material of the piston (2) in a base (16) of said piston (2) and in the region of the ball end (9) is greater than in the conical section (26).

3. Piston according to Claim 1 or 2,
**characterised in that**
a radial diameter of the clearance (15) decreases towards the base (16) of the piston (2).

4. Piston according to Claim 3,
**characterised in that**
the clearance (15) is closed off, in the neck region (19), by the abutment of an inner face of the wall (20) of said clearance (15) against the pin (14).

5. Piston according to Claim 4,
**characterised in that**
at least one bore (22) is constructed in the neck region (19).

6. Piston according to Claim 5,
**characterised in that**
the clearance (15) can be filled with a hydraulic fluid through the at least one bore (22).

7. Piston according to one of Claims 1 to 6,
**characterised in that**
a longitudinal bore (23) is constructed in the pin (14).

8. Piston according to Claim 7,
**characterised in that**
a restrictor (24) is provided in the longitudinal bore (23).

9. Piston according to one of Claims 1 to 8,
**characterised in that**
the piston (2) has piston rings (8).

10. Piston according to Claim 9,
**characterised in that**
the piston rings (8) are disposed in grooves (25) in the region of the base (16) of the piston (2).

11. Piston according to one of Claims 1 to 10,
**characterised in that**
a cavity (21) is constructed in the ball end (9).

12. Piston according to one of Claims 1 to 11,
**characterised in that**
the piston (2) is manufactured from round stock (13) by cold extrusion and rotary swaging.

13. Piston according to Claim 12,
**characterised in that**
the thickness of the material of the round stock (13) is so dimensioned that it amounts to 1.1 to 1.5 times, and preferably 1.15 to 1.2 times, the diameter of the ball end (9).

14. Piston according to Claim 13,
**characterised in that**
the diameter of the round stock (13) determines the maximum diameter of the piston (2).

15. Process for manufacturing a piston (2) for a piston engine, in particular for an axial-piston engine (1) of the inclined-axis type, wherein said piston (2) comprises a conical section (26), a neck region (19) and a ball end (9) which is formed onto said neck region (19), a clearance (15) which is constructed in the piston and a pin (14) which is constructed in said clearance (15), and wherein the wall (20) of the piston (2) has different thicknesses of material in different sections of its axial length,
wherein said process comprises the following steps:
a) the trimming of round stock (13) to the desired length;
b) the manufacture of an internal contour by cold extrusion;
c) the preparation of the external contour by rough-turning;
d) the manufacture of the external contour by round swaging; and
e) finishing,
the conical section (26) of the piston being formed out between the neck region (19) and a base region of the piston (2), and
the base (16) being formed onto the opposite end of the piston from the ball end (9).

16. Process according to Claim 15,
**characterised in that**
the second process step b) comprises the following partial steps:
- the selection of a suitable diameter for the peg (14) and the clearance (15);
- the selection of the thickness of material for a base (16) of the piston; and
- the cold extrusion of the internal contour of the piston (2), taking into account the dimensions selected.

17. Process according to Claim 15,
**characterised in that**
the third process step c) comprises the following partial steps:
- the rough-turning of an external contour for the piston (2), with removal of material in what will subsequently be the conical section (26) of the piston (2); and
- adaptation of the thickness of material in the form of a shoulder (18) in the region of the ball end (9) which is to be shaped.

18. Process according to Claim 15,
**characterised in that**
the fifth process step e) comprises the following partial steps:
- the installation of at least one bore (22) in the neck region (19) of the piston (2);
- the filling of the clearance (15) in the piston (2) with a suitable fluid;
- the installation of a longitudinal bore (23) with a restrictor (24) in the pin (14);
- the installation of grooves (25) for piston rings (8) in the region of the base (16) of the piston (2); and
- the hardening and grinding of said piston (2).

## Revendications

1. Piston (2) pour une machine à piston, notamment pour une machine à piston axial
(1) du type à axes inclinés, comportant une section conique (26), une zone de col (19) et une tête sphérique (9) formée au niveau de la zone de col (19), un évidement (15) réalisé dans le piston et un tenon (14) réalisé dans l'évidement (15),
la paroi (20) du piston (2) présentant en différentes sections de sa longueur axiale des épaisseurs de matériau différentes,
**caractérisé en ce que**
la section conique (26) du piston est formée entre la zone de col (19) et une zone de fond du piston (2), le fond (16) étant formé au niveau de l'extrémité du piston faisant opposée à la tête sphérique (9).

2. Piston selon la revendication 1,
**caractérisé en ce que**
l'épaisseur de matériau du matériau du piston (2) dans le fond (16) du piston (2) et dans la zone de la tête sphérique (9) est supérieure à celle dans la section conique (26).

3. Piston selon la revendication 1 ou 2,
**caractérisé en ce que**
un diamètre radial de l'évidement (15) diminue vers le fond (16) du piston (2).

4. Piston selon la revendication 3,
**caractérisé en ce que**
l'évidement (15) dans la zone de col (19) est fermé par le placement d'une surface interne de la paroi (20) de l'évidement (15) au niveau du tenon (14).

5. Piston selon la revendication 4,
**caractérisé en ce que**
au moins un alésage (22) est réalisé dans la zone de col (19).

6. Piston selon la revendication 5,
**caractérisé en ce que**
l'évidement (15) peut être rempli d'un liquide hydraulique par au moins un alésage (22).

7. Piston selon l'une quelconque des revendications 1 à 6,
**caractérisé en ce que**
un alésage longitudinal (23) est réalisé dans le tenon (14).

8. Piston selon la revendication 7,
**caractérisé en ce que**
une zone d'étranglement (24) est prévue dans l'alésage longitudinal (23).

9. Piston selon l'une quelconque des revendications 1 à 8,
**caractérisé en ce que**
le piston (2) présente des anneaux de piston (8).

10. Piston selon la revendication 9,
**caractérisé en ce que** les anneaux de piston (8) sont disposés dans des rainures (25) dans la zone du fond (16) du piston (2).

11. Piston selon l'une quelconque des revendications 1 à 10,
**caractérisé en ce que**
un espace vide (21) est réalisé dans la tête sphérique (9).

12. Piston selon l'une quelconque des revendications 1 à 11,
**caractérisé en ce que**
le piston (2) est fabriqué à partir d'un matériau rond (13) par extrusion à froid et par pétrissage rotatif

13. Piston selon la revendication 12,
**caractérisé en ce que**
l'épaisseur de matériau du matériau rond (13) est déterminée de telle sorte qu'elle soit de l'ordre de 1,1 fois à 1,5 fois, de préférence de 1,15 fois à 1,2 fois, le diamètre de la tête sphérique (9).

14. Piston selon la revendication 13,
**caractérisé en ce que**
le diamètre du matériau rond (13) définit le diamètre maximal du piston (2).

15. Procédé de fabrication d'un piston (2) pour une machine à piston, notamment pour une machine à piston axial (1) du type à axes inclinés, le piston (2) comprenant une section conique (26), une zone de col (19) et une tête sphérique (9) formée au niveau de la zone de col (19), un évidement (15) réalisé dans le piston et un tenon (14) réalisé dans l'évidement (15) et la paroi (20) du piston (2) présentant en différentes sections de sa longueur axiale des épaisseurs de matériau différentes,
le procédé comportant les étapes suivantes consistant à :
a) couper le matériau rond (13) à la longueur souhaitée,
b) fabriquer un contour interne par extrusion à froid,
c) préparer le contour externe par préusinage,
d) fabriquer le contour externe par pétrissage rotatif, et
e) usiner,
la section conique (26) du piston étant formée entre la zone de col (19) et une zone de fond du piston (2), et
le fond (16) étant formé au niveau de l'extrémité du piston opposée à la tête sphérique (9).

16. Procédé selon la revendication 15,
**caractérisé en ce que**
la deuxième étape du procédé b) comporte les sous-étapes suivantes consistant à :
- choisir un diamètre approprié pour le tenon (14) et pour l'évidement (15),
- choisir l'épaisseur de matériau pour un fond (16) du piston (2), et
- extruder à froid le contour interne du piston (2) en tenant compte des dimensions choisies.

17. Procédé selon la revendication 15,
**caractérisé en ce que**
la troisième étape du procédé c) comporte les sous-étapes suivantes consistant à:
- préusiner un contour externe du piston (2) par retrait de matériau dans la section conique (26) ultérieure du piston (2), et
- ajuster l'épaisseur de matériau sous la forme d'un épaulement (18) dans la zone de la tête sphérique (9) à former.

18. Procédé selon la revendication 15,
**caractérisé en ce que**
la cinquième étape du procédé e) comporte les sous-étapes suivantes consistant à :
- réaliser au moins un alésage (22) dans la zone de col (19) du piston (2),
- remplir l'évidement (15) du piston (2) avec un liquide approprié,
- réaliser un alésage longitudinal (23) avec une zone d'étranglement (24) dans le tenon (14),
- réaliser des rainures (25) pour les anneaux de piston (8) dans la zone du fond (16) du piston (2), et
- durcir et rectifier le piston (2).
